# EUROPEAN PATENT SPECIFICATION

(11) **EP 3 185 668 B1**
(45) Date of publication and mention of the grant of the patent: **17.10.2018**
(21) Application number: 15775496.1
(22) Date of filing: 27.08.2015
(51) Int. Cl.: A01F 12/44

(54) **SEPARATING DEVICE AND AGRICULTURAL MACHINE COMPRISING SUCH SEPARATING DEVICE**
TRENNVORRICHTUNG UND LANDWIRTSCHAFTLICHE MASCHINE MIT SOLCH EINER TRENNVORRICHTUNG
DISPOSITIF DE SÉPARATION ET MACHINE AGRICOLE COMPORTANT LEDIT DISPOSITIF DE SÉPARATION

(30) Priority: 29.08.2014 BE 201400674
(43) Date of publication of application: 05.07.2017
(73) Proprietor: Vallaey, Remi, 8810 Lichtervelde (BE)
(72) Inventor: VANSTEENKISTE, Toon, 8840 Staden (BE); SAMPERS, Dries, 8650 Houthulst (BE); VERMEULEN, Johny, 8840 Oostnieuwkerke (BE); CAPPELLE, Kris, 8840 Staden (BE); VALLAEY, Remi, 8810 Lichtervelde (BE)
(74) Representative: Cardoen, Annelies Andréa C.
(86) International application number: PCT/IB2015/056501
(87) International publication number: WO 2016/030850

(56) References cited:
- DE-C- 295 232
- FR-A- 1 599 417
- US-A1- 2012 193 272

## Description

This invention concerns firstly a separating device for an agricultural machine, comprising a sieve for separating grains or seeds of a harvested crop from other constituents of the crop, wherein the sieve comprises a number of sieve elements arranged approximately parallel to each other, which form a sieve surface and between which sieve openings are formed through which grains or seed can pass, and wherein the sieve comprises a supply side intended for the supply of the harvested crop and a discharge side intended for discharge of the other constituents of the crop. Secondly the invention concerns an agricultural machine comprising a separating device for separating grains or seeds of a harvested crop from other constituents of the crop.

Such separating devices are used for example in combine harvesters, in order to be able to collect the grains or seeds separately. Combine harvesters are used amongst others to harvest cereals and rapeseed. Combine harvesters are not only intended to harvest the crop, but also to separate the seeds or grain from the other constituents of the crop such as the chaff, the straw, the panicle, the empty ears, etc. In order to be able to separate the grains or seeds from the other constituents of the crop, usually a separating device is used with several sieves. In this separating device, the harvested crop first passes through one or more processing steps to detach the grains or seeds from the other constituents of the crop. Then the harvested crop is passed over the sieves to separate the grains or seeds from the other constituents of the crop. In this way, the grains or seeds can be stored completely separately. The harvested crop moves from the front of the harvester to the rear of the harvester, and during this relative movement passes over the sieves. The sieves are provided with openings through which the grains or seeds can pass. The grains or seeds are able to pass through these openings while the other constituents of the crop are intended to move along the top of the sieves towards the back of the harvester. At the back of the harvester, the other constituents of the crop fall back out of the harvester or are compressed into bales which are removed from the harvester at the back of the harvester.

The existing sieves are normally made of slats extending transversely to the movement direction of the harvested crop. Between the slats are sieve openings through which the seeds or grains can pass. The disadvantage of the existing sieves is that the sieve openings very quickly become clogged by said other constituents of the crop because these adhere to the slats. For example with maize, it is above all the panicle of the corn cob which causes the sieve openings to become clogged. As a result, the grains or seeds do not pass as well or at all through the sieve openings, whereby less or no separation of the harvested crop is possible. A large part of the grains or seeds is not therefore separated from the other constituents of the crop, so the yield is low. During harvesting, in addition it is necessary to stop several times a day to clean the sieves. Cleaning is cumbersome and takes time, reducing productivity. In particular, the sieves which are at the front of the harvester are difficult to reach, so cleaning these sieves is not easy and takes a lot of time. The sieves of the separating device are therefore a limiting factor during harvesting of the crop. The travel speed of the harvester is limited since the capacity of the sieves for separating the harvested crop is limited.

In wet conditions, the sieves become clogged more quickly, so it is almost impossible to harvest a crop. Often, in wet conditions, the front sieves of the harvester are not used, to prevent the need for cleaning them. This however means a capacity reduction, whereby the harvester can travel less quickly and the harvesting time increases.

In FR 1 599 417 a separating device for an agricultural machine, as described in the preamble of claim 1 of this invention, is disclosed.

It is thus an objective of the invention to produce a separating device for an agricultural machine, comprising a sieve for separating grains or seeds of a harvested crop from other constituents of the crop, whereby this sieve does not become clogged, or clogs less quickly during its use, than the existing sieves. It is also an aim of the invention to produce an agricultural machine comprising such a separating device.

This objective is achieved by providing a separating device for an agricultural machine according to claim 1.

This separating device may comprise one or more said sieves. The sieve elements extend in the direction of the discharge side. The harvested crop is also intended to be moved towards this discharge side. The movement direction of the harvested crop therefore extends towards the discharge side. Preferably a plane in which a said sieve element extends, and which extends approximately transversely to the sieve surface, forms an angle with said movement direction of the harvested crop, wherein the angle is between and 0° and 40°. More preferably, the angle is between 0° and 20°, and most preferably the angle is approximately 0°. At said angle of approximately 0°, the sieve elements extend approximately in the movement direction of the harvested crop.

During use of the separating device, the harvested crop is moved over the sieve from the supply side to the discharge side. Since the sieve elements extend in the direction of the discharge side and the harvested crop is also moved towards this discharge side, the sieve elements form no obstacle or virtually no obstacle to the other constituents of the crop, being for example the chaff, the straw, the panicle, the empty ears etc. The chance that these other constituents will adhere to the sieve elements or accumulate thereon is therefore smaller. Hence the sieve openings are not or are less susceptible to clogging, whereby the sieve will become clogged less quickly than the existing sieves. The sieve of the separating device according to the invention will thus be soiled less quickly, whereby it need be cleaned less often. The capacity of the separating device thus remains very high for a long time, whereby it is very beneficial to use the separating device.

This separating device is also ideal for use in wet conditions, i.e. when the harvested crop is wet. Also if the other constituents of the crop are wet, the chance that they will adhere or accumulate on the sieve elements is small. Also, if the separating device comprises a plurality of sieves, of which one or more sieves are more difficult to reach and hence more difficult to clean when the separating device is placed in an agricultural machine, then even these sieves which are difficult to reach can be used since they require no or almost no cleaning. The capacity of the separating device thus remains high even in wet conditions.

Preferably, the harvested crop is intended to be moved over the sieve surface from the supply side to the discharge side, and the sieve elements extend approximately in the movement direction of the harvested crop over the sieve surface. The chance of clogging of the sieve is here particularly low or non-existent, since the movement of the other constituents of the harvested crop is not hindered by the sieve elements.

According to the invention the sieve elements are rod-like elements. The other constituents of the crop have no or almost no tendency to adhere to rod-like elements. Also the shape of said sieve openings formed between the sieve elements is ideal for separating grains or seeds from the other constituents of the crop with the sieve elements being rod-like.

In a preferred embodiment, the sieve elements, at least at the level of the formed sieve surface, are covered with a non-stick covering layer. This covering layer may for example be a layer which is applied around said sieve element, wherein this covering layer lies almost directly against the sieve element or extends at a distance therefrom. This covering layer may also be applied to a said sieve element. The covering layer may be stuck to the sieve element. The covering layer may also be formed by coating said sieve element. The sieve elements for example may be immersed or sprayed to receive the covering layer. This covering layer may for example be made of plastic or rubber (natural or synthetic). For example a plastic tube may be applied around the sieve elements, or the sieve elements may be dipped in liquid plastic.

The advantage of this non-stick covering layer is that the other constituents of the crop such as straw, chaff, panicle, empty ears, do not adhere well to the non-stick covering layer, whereby the sieve openings become clogged even less quickly. In addition, if this non-stick covering layer is applied around a said sieve element and does not lie directly against this, then during use of the separating device the non-stick covering layer may vibrate with the sieve elements, giving better separation of the grains or seeds from the other constituents of the crop.

The already known sieves are often made almost completely of a metal such as stainless steel. This is a rigid material which is not or only slightly susceptible to wear. The disadvantage of these sieves is that it is not possible to harvest in cold temperatures. The crop parts would freeze onto the sieves, whereby these would become clogged directly.

In this preferred embodiment, the sieve elements may be made of any arbitrary material. Namely the non-stick covering layer may be designed such that at freezing temperatures, the other constituents of the crop will not adhere or freeze onto the covering layer. Using such a non-stick covering layer, it is possible to use the separating device in freezing temperatures.

Furthermore, preferably the non-stick covering layer is made of a plastic such as polyethylene. These are rigid materials with limited cost price, to which the other constituents of the crop will not adhere quickly.

Furthermore, also preferably, almost the entire outer surface of the sieve element is covered with said non-stick covering layer. In principle, it is sufficient if the sieve elements are covered at the level of the sieve surface, since it is at the level of the sieve surface that the other elements come into contact with the covered sieve elements. If the entire outer surface is covered, there is no risk that the other constituents will adhere to or freeze onto the uncovered parts. In addition, under certain circumstances it is more beneficial with regard to production to cover the entire sieve elements with a non-stick covering layer.

In a specific embodiment, the sieve elements are made of metal. The sieve elements may be made of stainless steel. This is a strong and wear-resistant metal. Of course the sieve elements may also be made of plastic. At freezing temperatures, the constituents of the harvested crop will not freeze onto plastic. These plastic sieve elements may or may not be covered with a non-stick covering layer.

In a greatly preferred embodiment, one or more of said sieve elements are mounted rotatably around rotation axes which extend approximately in the length direction of these one or more sieve elements. The form of the sieve elements, whether or not with covering layer, may then be designed such that by twisting of said rotatably mounted one or more sieve elements, the gap between successive (covered) sieve elements is adjusted. The sieve openings are located between these sieve elements, whereby changing said gap also changes the dimensions of the sieve openings. It is thus possible to use the separating device for separating several types of grains or seeds with different grain sizes. The grains of different grain types, such as maize and wheat, have different grain sizes. Also within a grain type, the grains may have different grain sizes. For example there are wheat species with large grains and wheat species with small grains. By twisting the sieve elements, it can easily be ensured that the dimensions of the sieve openings are changed such that they are adapted for the grain sizes of the grains or seeds to be separated.

The sieve elements may be twisted manually for example, or adjusted mechanically. The twisting of the sieve elements may for example be restricted to when the separating device is not in use. The sieve elements must then be twisted prior to sieving. However, embodiments may also exist wherein the sieve elements can be twisted during use of the separating device. This may be useful if, during use of the separating device, it is noted that the grains or seeds are not being separated well because the sieve openings are too large or too small.

Furthermore, preferably, the sieve elements are all mounted rotatably or are mounted to be alternately rotatable, so that the dimensions of all sieve openings are adjustable.

Furthermore, preferably, the cross sections of said one or more rotatably mounted sieve elements have an approximately oval form or the form of a rounded polygon. Thus for example they may be elliptical. The dimensions of the sieve openings are easily adjustable with sieve elements with cross sections of approximately oval form or the form of a rounded polygon. These sieve elements are also easy to produce.

In an alternative embodiment, the sieve elements, at least at the level of the formed sieve surface, are covered with a non-stick covering layer and the cross sections of said one or more rotatably mounted sieve elements with the covering layer have an approximately oval form or the form of a rounded polygon. Here the covering layer, whether or not together with the sieve elements, ensures said cross section. The cross section may for example be elliptical.

Furthermore, preferably, the sieve comprises fixing means for fixing said one or more rotatably mounted sieve elements relative to said rotation axes. During use of the separating device, it is namely undesirable for the sieve elements to rotate without the knowledge of the person using the separating device. The sieve openings will then namely be too small or too large without the user knowing this. Using fixing elements, it can be ensured that the dimensions of the sieve openings do not change undesirably.

The sieve preferably comprises a frame on which the sieve elements are attached, and the angle of incline of the sieve surface of the sieve relative to said frame of the sieve is preferably between 0.5° and 5°, more preferably between 0.7° and 1.3°. When the separating device is fitted in an agricultural machine and the frame is in an approximately horizontal position relative to the ground on which the agricultural machine is standing, it is desirable that the sieve surface has a certain inclination. When the sieve surface at the discharge side is slightly higher than at the supply side, it can be ensured that the harvested crop does not move too quickly over the sieve, whereby the sieve has more time to separate the grains or seeds from the other constituents of the crop. This desired inclination of the sieve surface may however also be achieved by the position of the frame in the agricultural machine.

In a greatly preferred embodiment, the separating device is intended to form part of a combine harvester. When this separating device forms part of a combine harvester, the separating device or the harvester may be fitted with a fan which blows out air, whereby the air blown out by the fan moves the harvested crop over the sieve surface towards the discharge side. The lighter other constituents of the crop then float, with the help of the air blown from the fan, over the sieve surface towards the discharge side, while the heavier grains or seeds fall down through the sieve openings.

Furthermore, this object is achieved by the provision of an agricultural machine comprising a separating device for separating grains or seeds of a harvested crop from other constituents of the crop, wherein the separating device is a separating device as described above. This agricultural machine may or may not be self-propelling. The agricultural machine is in particular a combine harvester. As already indicated in the description of the separating device according to the invention, the sieve will become clogged less quickly in both dry and wet conditions. The capacity of the separating device is thus much greater than in existing separating devices and it need be cleaned less often. This means that with such an agricultural machine, work can proceed more quickly. Thus a combine harvester comprising such as a separating device can harvest crop more quickly since fewer stops are required for cleaning the sieve, and harvesting can proceed more quickly because the capacity of the separating device remains high for a long period.

Preferably, each plane in which said sieve element extends and which extends approximately transversely to the sieve surface, extends approximately parallel to the proposed movement direction of the agricultural machine. For self-propelling agricultural machines, this corresponds to the direction of travel. The direction of travel of agricultural machines which, as well as harvesting the crop, also separate the crop, normally corresponds to the movement direction of the harvested crop. The sieve elements then do not constitute obstacles to which the other constituents of the crop can adhere.

In a highly preferred embodiment, the agricultural machine is a combine harvester.

The invention is now explained in more detail with reference to the detailed description which follows of a preferred embodiment of a separating device and an agricultural machine according to this invention. The purpose of this description is merely to give illustrative examples and indicate further benefits and features of the separating device and an agricultural machine, and it cannot in any way be interpreted as a restriction of the area of application of the invention or the patent rights claimed in the claims.

In this detailed description, reference is made by means of numerals to the enclosed drawings wherein:

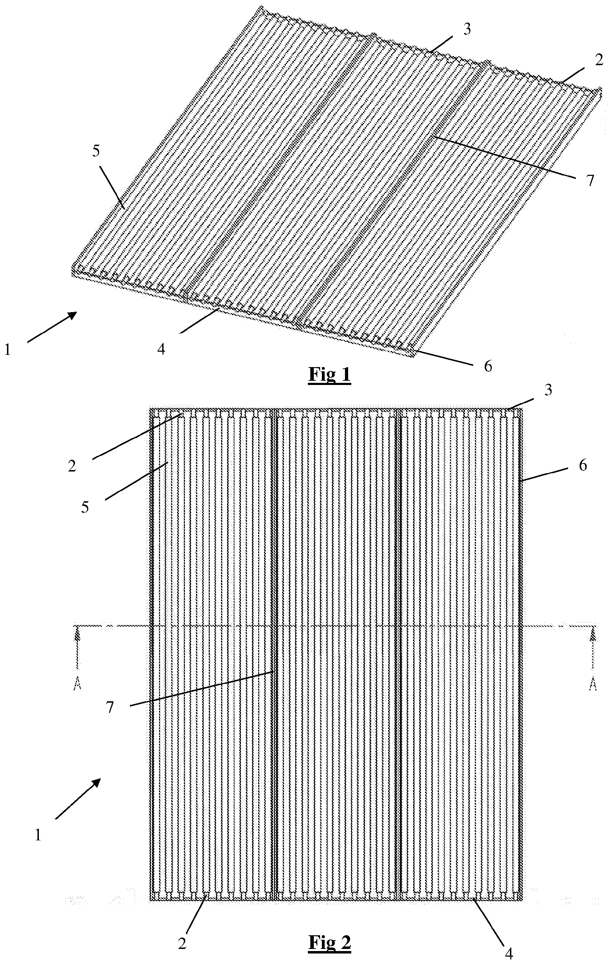

- Figure 1 is a perspective view of a sieve according to the invention;
- Figure 2 is a top view of the sieve shown in Figure 1;
- Figure 3 is a cross section of the sieve shown in Figures 1 and 2 along line A-A shown in Figure 2;
- Figure 4 is a perspective view of a first embodiment of a sieve element covered with a non-stick covering layer according to the invention;
- Figure 5 is a cross section of the sieve element covered with a non-stick covering layer as shown in Figure 4;
- Figure 6 is a perspective view of a second embodiment of a sieve element covered with a non-stick covering layer according to the invention;
- Figure 7 is a cross section of the sieve element covered with a non-stick covering layer as shown in Figure 6.

A preferred embodiment of this invention concerns a separating device comprising a plurality of sieves (1), wherein this separating device is intended to be placed in a combine harvester.

Combine harvesters are used to harvest cereals or seed crops. Combine harvesters combine various actions, wherein first they cut the crop. After cutting, the grains or seeds are detached from the other constituents of the crop, and the grains or seeds are almost completely separated from the other constituents of the crop.

The grains or seeds are separated from the other constituents of the crop via the sieves (1) of said separating device.

A sieve (1) of the separating device comprises a number of rod-like sieve elements (2) placed approximately parallel to each other, which form a sieve surface between which sieve openings are formed and through which the grains or seeds can pass. The sieve (1) comprises a supply side (3) intended for the supply of harvested crop, and a discharge side (4) intended for the discharge of the other constituents of the crop. Said sieve elements (2) extend towards the discharge side (4).

After the grains or seeds have been detached from the other constituents of the crop, the crop is moved over the sieve surfaces from the supply side (3) to the discharge side (4). This movement is produced via a fan which blows the harvested crop in the direction of the discharge side (4). Because the grains or seeds are heavier than the other constituents of the crop, such as the chaff, straw, panicle etc., the grains or seeds fall through the sieve openings while the other constituents of the crop are moved over the sieves (1). The grains or seeds are thus separated from the other constituents of the crop.

The separating device with sieves (1) is intended to be placed in the combine harvester such that said sieve elements (2) extend approximately in the movement direction of the harvested crop over the sieves (1), and each plane in which a said sieve element (2) extends and which extends approximately transversely to the sieve surface, extends approximately parallel to the proposed direction of travel of the combine harvester. In other words, the harvested crop is intended to move from the front of the harvester to the rear of the harvester, and the sieves (1) are placed such that the supply side (3) of the sieve (1) lies further to the front of the harvester than the discharge side (4) of the sieve (1), which lies further to the rear of the harvester.

The sieve elements (2) are made of stainless steel and almost their entire surface is covered with a non-stick covering layer (5). This non-stick covering layer (5) is here a plastic tube (5) which is arranged around a said sieve element (2). The inner circumference of such plastic tube (5) is slightly larger than the outer circumference of said sieve element (2), so that the plastic tube (5) does not lie directly around the sieve element (2) and a gap (8) is left between the plastic tube (5) and the sieve element (2). This gap (8) ensures that there is a clearance between the sieve element (2) and the plastic tube (5), so that during use of the separating device the plastic tubes (5) may vibrate relative to the sieve elements (2). This accelerates further the separation of the grains or seeds from the other constituents of the crop.

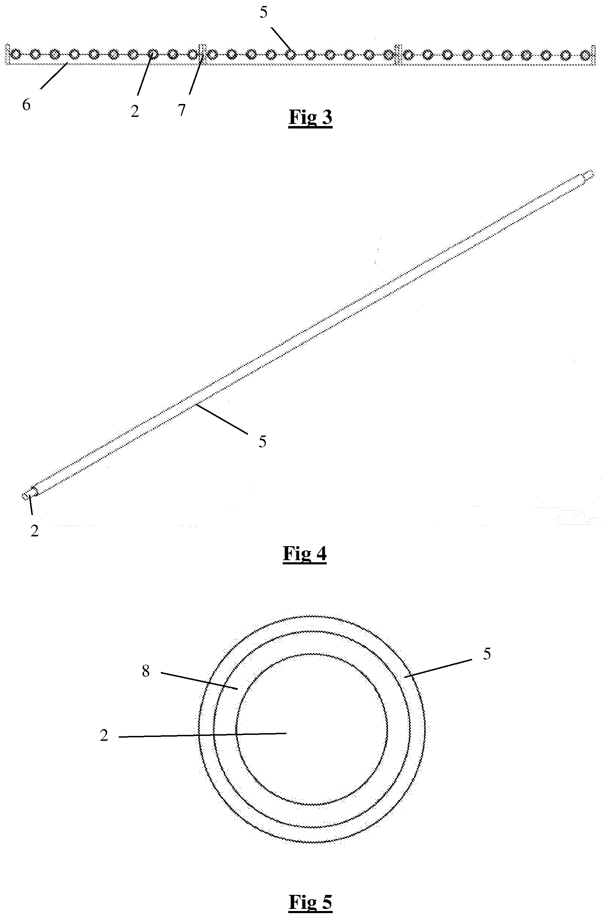

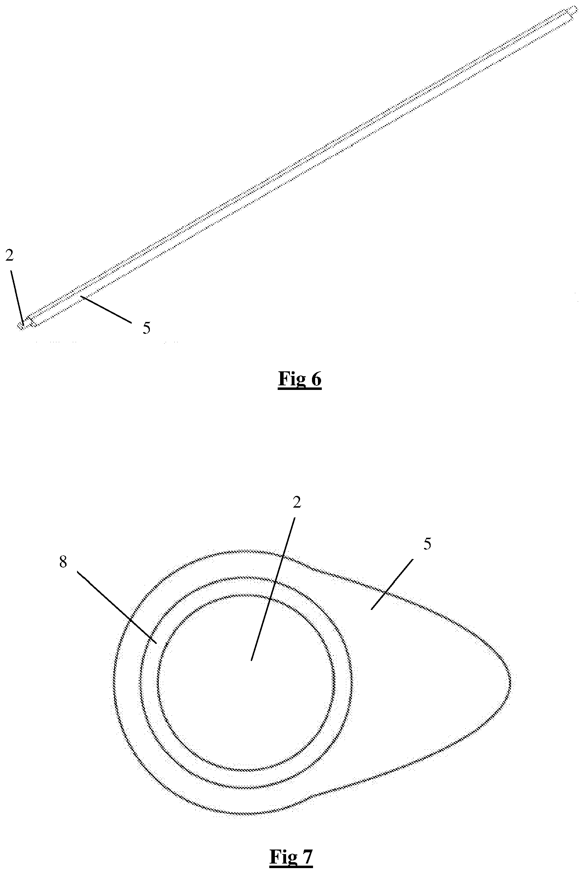

Two possible embodiments of covered sieve elements (2) are shown here. However other embodiments are also possible. Figures 4 and 5 show a first embodiment. Here the cross section of the sieve element (2) is circular and the cross section of the plastic tube (5) is also circular. In Figures 6 and 7, a second embodiment is shown. The cross section of the sieve element (2) is here circular and the cross section of the plastic tube (5) is more or less oval.

In sieves (1) comprising sieve elements (2) of the second embodiment, the sieve elements (2) are mounted rotatably around rotation axes which extend approximately in the length direction of these sieve elements (2). By twisting one or more of these sieve elements (2) around their rotation axes, the mutual spacing between the covered sieve elements (2) is changed, whereby the size of the sieve openings between the covered sieve elements (2) also changes. In these sieves (1), the sieve openings are thus adaptable to the grain size of the grains or seeds of the harvested crop. The sieve elements (2) may be twisted manually or mechanically. The sieves (1) are here also provided with fixing means for fixing the sieve elements (2), so that the sieve elements (2) cannot twist when this is not desired.

Furthermore, each sieve (1) comprises a frame (6) on which the sieve elements (2) are attached and wherein the angle of incline of the sieve surface of the sieve (1) relative to said frame (6) of the sieve (1) is between 0,90° and 1°, preferably 0,95°. The separating device is placed in the combine harvester such that the discharge side (4) of each sieve (1) is higher than the supply side (3) relative to the ground on which the harvester is intended to stand. This ensures that the harvested crop does not pass too quickly over the sieves (1), whereby separation can be performed optimally.

The frame (6) is furthermore provided with partitions (7) which extend approximately parallel to the sieve elements (2), and extend completely between the supply side (3) and the discharge side (4) of the sieve (1). These partitions (7) contribute to the stiffness of the sieve (1).

With a combine harvester with a separating device as described above, it is possible to harvest a crop much more quickly than with existing combine harvesters. This is because the sieves (1) of the separating device are less susceptible to soiling than the existing sieves (1), so that less cleaning is necessary than with the existing sieves (1). For example, with existing combine harvesters, during use thereof the sieves (1) must be cleaned every 2 to 5 hours. With the combine harvester with the separating device as described above, during use thereof the sieves (1) need only be cleaned after a few days. Because the sieves (1) do not become soiled quickly, the capacity of the sieves (1) also remains high, whereby the crop can also be moved over the sieves (1) at a higher speed. Thus the crop can be cut more quickly, whereby harvesting is faster.

The combine harvester can also be used at temperatures in the vicinity of the freezing point and even at negative temperatures. Because of the plastic tubes (5) placed around the stainless steel sieve elements (2), the constituents of the crop will not freeze on the sieve surface, whereby even at freezing temperatures no clogging of the sieve openings occurs. Also in wet conditions, the constituents of the crop do not adhere to the sieve surface, partly because the sieve elements (2) are oriented in the movement direction of the crop, whereby the sieve elements (2) do not form obstacles on which the other constituents of the crop can stick.

## Claims

1. Separating device for an agricultural machine, comprising a sieve (1) for separating grains or seeds of a harvested crop from other constituents of the crop, wherein the sieve (1) comprises a number of sieve elements (2) arranged approximately parallel to each other, which form a sieve surface and between which sieve openings are formed through which grains or seeds can pass, wherein the sieve (1) has a supply side (3) intended for the supply of the harvested crop and a discharge side (4) intended for discharge of the other constituents of the crop, and wherein said sieve elements (2) extend in the direction of the discharge side (4), **characterized in that** the sieve elements (2) are rod-like elements.

2. Separating device according to claim 1, **characterized in that** the sieve elements (2), at least at the level of the formed sieve surface, are covered with a non-stick covering layer (5).

3. Separating device according to claim 2, **characterized in that** the non-stick covering layer (5) is made of plastic.

4. Separating device according to claim 2 or 3, **characterized in that** approximately the entire outer surface of the sieve elements (2) is covered with said non-stick covering layer (5).

5. Separating device according to any of the preceding claims, **characterized in that** the sieve elements (2) are made of metal.

6. Separating device according to any of the preceding claims, **characterized in that** one or more of said sieve elements (2) are mounted rotatably around rotation axes which extend approximately in the length direction of these one or more sieve elements (2).

7. Separating device according to claim 6, **characterized in that** the cross sections of said one or more rotatably mounted sieve elements (2) have an approximately oval form or the form of a rounded polygon.

8. Separating device according to claim 6, **characterized in that** the sieve elements (2), at least at the level of the formed sieve surface, are covered with a non-stick covering layer (5) and that the cross sections of said one or more rotatably mounted sieve elements (2) with the covering layer (5) have an approximately oval form or the form of a rounded polygon.

9. Separating device according to any of claims 6 to 8, **characterized in that** the sieve (1) comprises fixing means for fixing said one or more rotatably mounted sieve elements (2) relative to said rotation axes.

10. Separating device according to any of the preceding claims, **characterized in that** the sieve (1) comprises a frame (6) on which the sieve elements (2) are attached, and that the angle of incline of the sieve surface of the sieve (1) relative to said frame (6) of the sieve (1) is between 0,5° and 5°.

11. Separating device according to any of the preceding claims, **characterized in that** this separating device is intended to form part of a combine harvester.

12. Agricultural machine comprising a separating device for separating grains or seeds of a harvested crop from other constituents of the crop, **characterized in that** the separating device is a separating device according to any of the preceding claims 1 to 11.

13. Agricultural machine according to claim 12, **characterized in that** each plane in which a said sieve element (2) extends and which extends approximately transversely to the sieve surface, extends approximately parallel to the provided movement direction of the agricultural machine.

14. Agricultural machine according to claim 12 or 13, **characterized in that** the agricultural machine is a combine harvester.

## Patentansprüche

1. Trennvorrichtung für eine landwirtschaftliche Maschine, umfassend ein Sieb (1) zum Trennen von Getreide- oder Samenkörnern einer geernteten Feldfrucht von anderen Bestandteilen der Feldfrucht, wobei das Sieb (1) eine Anzahl von Siebelementen (2) umfasst, die annähernd parallel zueinander angeordnet sind, die eine Siebfläche ausbilden und zwischen denen Sieböffnungen ausgebildet sind, durch die Getreide- oder Samenkörner passieren können, wobei das Sieb (1) eine Zufuhrseite (3), die für die Zufuhr der geernteten Feldfrucht bestimmt ist, und eine Abgabeseite (4), die für die Abgabe der anderen Bestandteile der Feldfrucht bestimmt ist, aufweist und wobei sich die Siebelemente (2) in die Richtung der Abgabeseite (4) erstrecken, **dadurch gekennzeichnet, dass** die Siebelemente (2) stabförmige Elemente sind.

2. Trennvorrichtung nach Anspruch 1, **dadurch gekennzeichnet, dass** die Siebelemente (2) zumindest auf der Höhe der ausgebildeten Siebfläche mit einer Antihaftbeschichtung (5) beschichtet sind.

3. Trennvorrichtung nach Anspruch 2, **dadurch gekennzeichnet, dass** die Antihaftbeschichtung (5) aus Kunststoff besteht.

4. Trennvorrichtung nach Anspruch 2 oder 3, **dadurch gekennzeichnet, dass** annähernd die gesamte Außenfläche der Siebelemente (2) mit der Antihaftbeschichtung (5) beschichtet ist.

5. Trennvorrichtung nach einem der vorhergehenden Ansprüche, **dadurch gekennzeichnet, dass** die Siebelemente (2) aus Metall bestehen.

6. Trennvorrichtung nach einem der vorhergehenden Ansprüche, **dadurch gekennzeichnet, dass** eines oder mehrere der Siebelemente (2) drehbar um Drehachsen angebracht sind, die sich annähernd in der Längsrichtung des einen oder der mehreren Siebelemente (2) erstrecken.

7. Trennvorrichtung nach Anspruch 6, **dadurch gekennzeichnet, dass** die Querschnitte des einen oder der mehreren drehbar angebrachten Siebelemente (2) eine annähernd ovale Form oder die Form eines abgerundeten Polygons aufweisen.

8. Trennvorrichtung nach Anspruch 6, **dadurch gekennzeichnet, dass** die Siebelemente (2) zumindest auf der Höhe der ausgebildeten Siebfläche mit einer Antihaftbeschichtung (5) beschichtet sind und dass die Querschnitte des einen oder der mehreren drehbar angebrachten Siebelemente (2) mit der Beschichtung (5) eine annähernd ovale Form oder die Form eines abgerundeten Polygons aufweisen.

9. Trennvorrichtung nach einem der Ansprüche 6 bis 8, **dadurch gekennzeichnet, dass** das Sieb (1) Fixiermittel zum Fixieren des einen oder der mehreren drehbar angebrachten Siebelemente (2) relativ zu den Drehachsen umfasst.

10. Trennvorrichtung nach einem der vorhergehenden Ansprüche, **dadurch gekennzeichnet, dass** das Sieb (1) einen Rahmen (6) umfasst, auf dem die Siebelemente (2) befestigt sind, und dass der Neigungswinkel der Siebfläche des Siebs (1) relativ zu dem Rahmen (6) des Siebs (1) zwischen 0,5° und 5° beträgt.

11. Trennvorrichtung nach einem der vorhergehenden Ansprüche, **dadurch gekennzeichnet, dass** die Trennvorrichtung bestimmt ist, einen Teil eines Mähdreschers auszubilden.

12. Landwirtschaftliche Maschine umfassend eine Trennvorrichtung zum Trennen von Getreide- oder Samenkörnern einer geernteten Feldfrucht von anderen Bestandteilen der Feldfrucht, **dadurch gekennzeichnet, dass** die Trennvorrichtung eine Trennvorrichtung nach einem der vorhergehenden Ansprüche 1 bis 11 ist.

13. Landwirtschaftliche Maschine nach Anspruch 12, **dadurch gekennzeichnet, dass** jede Ebene, in der sich ein Siebelement (2) erstreckt und die sich annähernd quer zu der Siebfläche erstreckt, sich annähernd parallel zu der bereitgestellten Bewegungsrichtung der landwirtschaftlichen Maschine erstreckt.

14. Landwirtschaftliche Maschine nach Anspruch 12 oder 13, **dadurch gekennzeichnet, dass** die landwirtschaftliche Maschine ein Mähdrescher ist.

## Revendications

1. Dispositif de séparation pour un engin agricole, comprenant un crible (1) servant à séparer des grains ou des graines d'un produit de culture récolté et d'autres éléments constitutifs du produit de culture, le crible (1) comprenant un certain nombre d'éléments de crible (2) agencés approximativement de manière parallèle les uns aux autres, qui forment une surface de crible et entre lesquels sont formées des ouvertures de crible à travers lesquelles peuvent passer des graines ou graines, le crible (1) comportant un côté d'introduction (3) prévu pour l'introduction du produit de culture récolté et un côté de rejet (4) prévu pour le rejet des autres éléments constitutifs du produit de culture, et lesdits éléments de crible (2) s'étendant en direction du côté de rejet (4), **caractérisé en ce que** les éléments de crible (2) sont des éléments en forme de tige.

2. Dispositif de séparation selon la revendication 1, **caractérisé en ce que** les éléments de crible (2), au moins au niveau de la surface de crible formée, sont recouverts d'une couche de revêtement (5) anti-adhérente.

3. Dispositif de séparation selon la revendication 2, **caractérisé en ce que** la couche de revêtement (5) anti-adhérente est composée de plastique.

4. Dispositif de séparation selon la revendication 2 ou 3, **caractérisé en ce qu'**approximativement la totalité de la surface extérieure des éléments de crible (2) est recouverte de ladite couche de revêtement (5) anti-adhérente.

5. Dispositif de séparation selon l'une quelconque des revendications précédentes, **caractérisé en ce que** les éléments de crible (2) sont composés de métal.

6. Dispositif de séparation selon l'une quelconque des revendications précédentes, **caractérisé en ce qu'**un ou plusieurs desdits éléments de crible (2) sont installés à rotation autour d'axes de rotation qui s'étendent approximativement dans la direction de la longueur de cet élément ou ces éléments de crible (2) .

7. Dispositif de séparation selon la revendication 6, **caractérisé en ce que** les sections transversales dudit ou desdits éléments de crible (2) installés à rotation présentent une forme approximativement ovale ou la forme d'un polygone arrondi.

8. Dispositif de séparation selon la revendication 6, **caractérisé en ce que** les éléments de crible (2), au moins au niveau de la surface de crible formée, sont recouverts d'une couche de revêtement (5) anti-adhérente et **en ce que** les sections transversales dudit ou desdits éléments de crible (2) installés à rotation, comportant la couche de revêtement (5), présentent une forme approximativement ovale ou la forme d'un polygone arrondi.

9. Dispositif de séparation selon l'une quelconque des revendications 6 à 8, **caractérisé en ce que** le crible (1) comprend des moyens de fixation servant à fixer ledit ou lesdits éléments de crible (2) installés à rotation par rapport auxdits axes de rotation.

10. Dispositif de séparation selon l'une quelconque des revendications précédentes, **caractérisé en ce que** le crible (1) comprend un cadre (6) sur lequel sont attachés les éléments de crible (2), et **en ce que** l'angle d'inclinaison de la surface de crible du crible (1) par rapport audit cadre (6) du crible (1) est compris entre 0,5° et 5°.

11. Dispositif de séparation selon l'une quelconque des revendications précédentes, **caractérisé en ce que** ce dispositif de séparation est destiné à faire partie d'une moissonneuse-batteuse.

12. Engin agricole comprenant un dispositif de séparation servant à la séparation de grains ou de graines d'un produit de culture récolté et d'autres éléments constitutifs du produit de culture, **caractérisé en ce que** le dispositif de séparation est un dispositif de séparation selon l'une quelconque des revendications 1 à 11.

13. Engin agricole selon la revendication 12, **caractérisé en ce que** chaque plan dans lequel s'étend un dit élément de crible (2) et qui s'étend approximativement transversalement à la surface de crible, s'étend approximativement parallèlement à la direction de déplacement établie de l'engin agricole.

14. Engin agricole selon la revendication 12 ou 13, **caractérisé en ce que** l'engin agricole est une moissonneuse-batteuse.
